Europäisches Patentamt

European Patent Office

Office européen des brevets

(19)

(11) Veröffentlichungsnummer: **0 224 112 B1**

(12)

# EUROPÄISCHE PATENTSCHRIFT

(45) Veröffentlichungstag der Patentschrift: 08.01.92

(51) Int. Cl.5: **C09K 3/18, C08L 83/04**

(21) Anmeldenummer: **86115598.4**

(22) Anmeldetag: **11.11.86**

(54) **Verwendung von Siliconmassen zur Verhinderung der Vereisung auf Substraten.**

(30) Priorität: **21.11.85 DE 3541100**

(43) Veröffentlichungstag der Anmeldung:
**03.06.87 Patentblatt 87/23**

(45) Bekanntmachung des Hinweises auf die
Patenterteilung:
**08.01.92 Patentblatt 92/02**

(84) Benannte Vertragsstaaten:
**BE DE FR GB IT NL SE**

(56) Entgegenhaltungen:
**DE-A- 3 323 909**
**GB-A- 1 422 149**
**US-A- 3 959 563**

(73) Patentinhaber: **BAYER AG**

**W-5090 Leverkusen 1 Bayerwerk(DE)**

(72) Erfinder: **Achtenberg, Theo,**
**Im Bergischen Heim 6**
**W-5090 Leverkusen 3(DE)**
Erfinder: **Sattlegger, Hans, Dr.**
**Auf dem Heidchen 9**
**W-5074 Odenthal-Glöbusch(DE)**

**EP 0 224 112 B1**

## Beschreibung

Die vorliegende Erfindung betrifft bestimmte Polysiloxanmassen, die zur Verhinderung der Eisbildung auf Gegenständen, die Vereisungsbedingungen ausgesetzt sind, verwendet werden.

Eis haftet an der Oberfläche eines Gegenstands durch die Wasserstoffbrücken zwischen dem Wasser und der Oberfläche mit einer enormen Ädhasion. Frost und Vereisungsschäden treten in den Kaltklimazonen und während des Winters in den verschiedensten Teilen der Welt auf. Die vielfältigen Gefahren durch Frost und Vereisung umfassen auch die auf See und bei der Luftfahrt durch Vereisung der Wasserfahrzeuge und Flugzeuge. Dieses Problem tritt auch in ausgeprägten Maß auf Bohrinseln im sogenannten "Offshore-Bereich" auf. Es hat zwar keineswegs an Versuchen gefehlt, die Eisbildung zu verhindern. Es wurden mechanische, thermische und chemische Methoden erprobt, doch sind diese bis jetzt alle wenig erfolgreich und im allgemeinen auch viel zu aufwendig gewesen.

Die bisherigen Versuche, die Bildung von Eis auf der Oberfläche eines Gegenstandes durch Auftragen einer Beschichtungs-Zusammensetzung zu verhindern, haben die Vereisungsneigung zwar etwas reduziert. Bekannte, für diesen Zweck verwendete, Beschichtungs-Zusammensetzungen umfassen vorwiegend Acrylharze, Gummi, fluorhaltige Harze, Siliconharze etc. enthaltende Zusammensetzungen. Unter diesen sind Siliconharze noch am besten geeignet, gewisse Verbesserungen zu erzielen (vgl. z.B. Chemical Abstracts, Vol. 93, 134 009p, US-PS 4 271 215, DE-OS 3 238 039). Bisher konnte jedoch die Eisbildung nicht zuverlässig verhindert werden.

Gegenstand der vorliegenden Erfindung ist nun die Verwendung von Polysiloxanmassen, die sich unter Einwirkung von Wasser bzw. Luftfeuchtigkeit in gummielastische Massen umwandeln und die aus den folgenden Kompenenten erhältlich sind:

A) $\alpha$, $\omega$-Dihydroxypolydiorganosiloxanen einer Viskosität von etwa 500 bis 2.000.000 cP (20$^\circ$ C),

B) gegebenenfalls eines $\alpha,\omega$-Bis-(trimethylsiloxy)-polydimethylsiloxans,

C) einer vernetzend wirkenden Substanz,

D) gegebenenfalls eines oder mehrerer Haftvermittler,

E) eines verstärkend und/oder nicht verstärkend wirkenden Füllstoff sowie Pigmente

F) eines Härtungskatalysators

G) gegebenenfalls eines Lösemittels

zur Verhinderung der Vereisung auf Substraten.

Anwendungsfertige Pasten auf Basis von Organopolysiloxanen haben bisher bereits ein umfangreiches Einsatzgebiet als Fugendichtstoffe gefunden. Derartige Massen und die daraus durch Vernetzung unter Aufnahme von Luftfeuchtigkeit erhaltenen Elastomerkörper stellen eine ideale Dichtungssubstanz für die vielfältigsten Zwecke dar. Beschrieben werden klassische Vertreter derartiger sogenannter Einkomponentensysteme z.B. in FR-PS 1 188 495, DE-PS 1 247 646 oder W. Noll, Chemie und Technologie der Silicone, 1966, Verlag Chemie, Weinheim, Kap. 8.1. insbesondere S. 341 und 342.

Überraschenderweise konnte nun gefunden werden, daß derartige Massen eine sehr geringe Adhäsion gegenüber Eis im Vergleich zu anderen Werkstoffen aufweisen.

Dank der hervorragenden hydrophoben Wirkung dieser Stoffe wird eine kompakte Eisbildung weitestgehend verhindert und eventuell anhaftendes grobkristallines Eis kann bereits durch stärkeren Wind entfernt werden, bzw. fällt aufgrund der losen Beschaffenheit und der geringen Adhäsion schnell ab.

Diese Massen haben ferner den Vorteil, daß sie mit den verschiedensten Lösemittel (wasserfrei) verdünnt werden können und die Applikation durch z.B. Spritzen auf den vorhandenen Untergrund relativ schnell und kostengünstig durchgeführt werden kann.

Die erfindungsgemäß eingesetzten Massen haben jedoch gegenüber den relativ starren und harten bekannten Materialien den bedeutenden Vorteil, daß es sich bei diesem Produkt im ausgehärteten Zustand um einen sehr elastischen Stoff handelt, der auch größere Bewegungen (je nach Einstellung von ca. ± 20 % und ± 50 %) aufnehmen kann, ohne daß die Funktionstüchtigkeit beeinträchtigt wird. Diese Elastizität ist von besonderem Vorteil bei der Ablösung von Eisteilen vom Untergrund.

Die Vulkanisate sind ferner unempfindlich gegen die verschiedensten Umwelteinflüsse wie z`B. UV-Strahlung, Feuchtigkeit, Meerwasser, hohe und tiefe Temperaturen. Ihr mechanisches Verhalten wird hierdurch auch über sehr lange Zeit nicht verändert, was natürlich bei einem Einsatz auf z.B. einer Bohrinsel im Offshore-Bereich von großem Vorteil ist.

Als praktische Anwendungsgebiete im Offshore-Bereich können

a) Bohrinseln

b) Bohrschiffe

c) Begleitschiffe

d) Versorgungsschiffe

EP 0 224 112 B1

genannt werden.

Durch die genannten Anwendungen der erfindungsgemäßen Massen ist eine beträchtliche Kostensenkung (Einsparung v. Energie) zu erzielen, da bisher an den kritischen Stellen die Eisbildung z.B. an einer Bohrinsel durch elektrische Heizungen verhindert werden muß.

Die erfindungsgemäß verwendeten kalthärtenden Einkomponenten-Silicon-Systeme enthalten üblicherweise folgende Bestandteile:

1. Ein $\alpha,\omega$-Dihydroxydiorganosiloxan; dabei wird die Organogruppe normalerweise eine Methyl- oder Phenylgruppe sein. In kleineren Anteilen kann auch eine Halogenalkyl-, wie z.B. Chlormethyl-, eine Alkenyl-, wie z.B. Vinyl oder eine Cycloalkyl-, wie z.B. eine Cyclohexylgruppe vorliegen. Die Viskosität dieser Dihydroxypolydiorganosiloxane liegt - je nach den Anforderungen der Endprodukte - zwischen etwa 500 und 2.000.000 cP (20° C). Derartige Homo, Hetero- oder auch Copolymerisate machen im allgemeinen etwa 10 Gew.-% bis 90 Gew.-% der gesamten Pastenmenge aus.

2. Als Weichmacher bezeichnete Zusätze wie z. B. $\alpha,\omega$-Trialkylsiloxypolydiorganosiloxan von 10 bis 1.000.000 cP (20° C).

3. Bei der Vernetzersubstanz handelt es sich um polyfunktionelle Organosiliciumverbindungen mit mehr als zwei funktionellen Gruppen.

Bei der Herstellung der erfindungsgemäß verwendbaren Einkomponenten-Silicon-Pasten durch Abmischen der verschiedenen unter A)-G) aufgeführten Substanzen können die als Vernetzer dienenden Substanzen entweder während des Mischprozesses oder während des Lagerprozesses oder auch schon in einer Art Vormischung durch Abspaltung einer der reaktiven Gruppen an die Polymermenge gebunden sein.

Solche Organosiliciumverbindungen können sein:

a) nach der Formel

Ry SiX$_{4-y}$

y = 0 oder 1.

Hierbei kann R ein Alkyl, Alkenyl, Aryl oder entsprechend halogenierter Rest sein.

X ist eine reaktive Gruppe, die mit einer Silanolgruppe des Bestandteils 1) reagieren kann. Die reaktive Gruppe kann z.B. eine Alkoxy-, Acyloxy-, Amino-, Säureamid- oder Oximgruppe sein. Bevorzugt werden Alkyltriacetoxy-silane eingesetzt.

b) durch teilweise Hydrolyse entstehende Di-, Tri- und Polysiloxane der unter a) aufgeführten Silane wie das Formelbild für das Disiloxan zeigt

RyX$_{3-y}$ - Si - O - Si - X$_{3-y}$ - R$_y$

wie C) in DE-OS 1 794 197 dargestellt.

4) Füllstoffe (beladen oder unbeladen) allgemeiner Art einzeln oder wie meistens im Gemisch verwendet, z.B. verstärkende Füllstoffe (hochdisperse, durch Flammenhydrolyse hergestellte Kieselsäure, Titandioxyd, Ruß usw.) oder Füllstoffe wie Quarzmehl, Kreide (natürliche und gefällte), Kunststoffpulver und Pigmente aller Art wie z.B. Eisenoxidpigmente.

5) Hilfsstoffe verschiedenster Art, wie z.B. die unter 2) beschriebenen Silane mit Aminoalkyl, Epoxyalkyl oder anderen reaktiven Alkylgruppen.

a) Zusatzstoffe, die z.B. wirksam sind als Trockner, wie z.B. komplexe Titansäureester (vgl. z.B. DE-PS 1 258 087)

b) Zusatzstoffe, die z.B. wirksam sind als Haftvermittler, wie z.B. Hexamethyldisiloxan (vgl. US-Patent 4 419 484 oder EP 0057874 B1) oder Di-tert.-butoxy-diacetoxysilan. Die Haftung kann auch durch die Verwendung von Primern verbessert werden.

c) Katalysatoren zur Beschleunigung der Reaktion wie z.B. Organozinnverbindungen oder z.B. Aminoverbindungen,

d) als Lösungsmittelzusätze eignen sich prinzipiell solche, die mit der vernetzend wirkenden Substanz nicht reagieren wie z.B. Xylol, Benzinfraktionen oder z.B. Isododecan oder mehrere Gemische der verschiedensten Lösungsmittel um die erfindungsgemäß eingesetzte Substanz z.B. so einstellen zu können, daß sie auf die verschiedensten Untergründe aufgespritzt werden kann.

Die Polysiloxanmassen können auf bekannte Weise in Planetenmischern, Disolvern oder anderen geeigneten Mischern hergestellt werden.

Bevorzugt sind die folgenden Lösungsmittel: Xylol, Isododecan.

Die Menge des Lösungsmittels beträgt im allgemeinen etwa 5 bis 85 Gew.-% - bezogen auf die

3

EP 0 224 112 B1

Gesamtmenge des Beschichtungsmittels - bevorzugt 35 - 55 Gew.-%. Es ist aber auch möglich unter ganz bestimmten Voraussetzungen lösungsmittelfrei zu arbeiten.

Das Aufbringen der Beschichtung erfolgt z.B. durch Sprühen, Spritzen, Streichen, Tauchen, Gießen, Bevorzugt wird die Beschichtung durch ein sog. "Air-less"-Spritzen aufgebracht.

Die Herstellung der erfindungsgemäß einzusetzenden Substanzen sowie deren Anwendung wird anhand der folgenden Beispiele näher erläutert (Prozentangaben sind - soweit nicht anders angegeben ist - Gew.-%).

Beispiel 1

Es wurde eine Mischung aus 60 Gew.-Tln. $\alpha$, $\omega$-Dihydroxypolydimethylsiloxan, Viskosität bei 20° C 50.000 cSt und 20 Gew.-% Tln. $\alpha$,$\omega$-Bis-(trimethylsiloxy)-polydimethylsiloxan, Viskosität bei 20° C 1.400 cSt. vorgelegt. Dazu wurden bei Raumtemperatur 5 Gew.-Tle. Ethyltriacetoxysilan, sowie 0,9 Gew.-Tle. Di-tert.-butoxy-diacetoxysilan gegeben und kurz gerührt. Nun wurden 9 Gew.-Tle. feindisperse Kieselsäure, sowie 0,4 Gew.-Tle. Eisenoxidpigment zugegeben und bis zur Homogenität unter Vakuum gerührt. Danach wurden 0,02 Gew.-Tle. eines Katalysators (Dibutylzinndiacetat) zugegeben und unter Vakuum homogen eingerührt. Zum Schluß wurde mit 60 Gew.-Tl. Xylol versetzt und homogen eingemischt. Am Ende wurde kurz Vakuum angelegt.

Die Masse wurde nun abgefüllt und konnte ohne Feuchtigkeitszutritt 1/2 Jahr gelagert werden, ohne daß die Vulkanisationsfähigkeit oder die Haftung bei der späteren Anwendung als Anti-Icing-Masse beeinträchtigt wurde.

Diese Masse kann z.B. nach der "air-less"-Technik gespritzt werden.

Auch die folgenden Beispiele zeigten hinsichtlich Lagerung und Anwendung die gleichen Eigenschaften.

Beispiel 2

Es wurde eine Mischung aus 60 Gew.-Tln. $\alpha$, $\omega$-Dihydroxypolydimethylsiloxan, Viskosität bei 20° C 50.000 cSt und 20 Gew.-Tln. $\alpha$, $\omega$-Bis-(trimethylsiloxy)-polydimethylsiloxan, Viskosität bei 20° C 1400 cP vorgelegt. Dazu wurden bei Raumtemperatur 5 Gew.-Tle. Methyltriacetoxysilan gegeben und kurz gerührt. Nun wurden 9 Gew.-Tle. feindisperse Kieselsäure, sowie 0,4 Gew.-Tle. Eisenoxidpigment zugegeben und bis zur Homogenität unter Vakuum gerührt. Danach wurden 0,01 Gew.-Tle. eines Katalysators (Dibutylzinndiacetat) zugeben und unter Vakuum homogen eingerührt. Zum Schluß wurde mit 60 Gew.-Tl. Isooktan versetzt und homogen eingemischt. Am Ende wurde kurz Vakuum angelegt.

Beispiel 3

Es wurde eine Mischung aus 60 Gew.-Tln. $\alpha$, $\omega$-Dihydroxypolydimethylsiloxan, Viskosität bei 20° C 50.000 cSt und 20 Gew.-Tln. $\alpha$, $\omega$-Bis-(trimethylsiloxy)-polydimethylsiloxan, Viskosität bei 20° C 1.400 cSt sowie 2 Gew.-Tln Hexamethyldisiloxan vorgelegt. Dazu wurden bei Raumtemperatur 15 Gew.-Tle Vinyltriacetoxysilan gegeben und kurz gerührt. Nun wurden 9 Gew.-Tle feindisperse Kieselsäure, sowie 0,4 Gew.-Tle Eisenoxidpigment zugegeben und bis zur Homogenität unter Vakuum gerührt. Danach wurden 0,01 Gew.-Tle. eines Katalysators (Dibutylzinndiacetat) zugegeben und unter Vakuum homogen eingerührt. Zum Schluß wurde mit 60 Gew.-Tln. Isododecan versetzt und homogen eingemischt. Am Ende wurde kurz Vakuum angelegt.

Beispiel 4

Es wurde eine Mischung aus 60 Gew.-Tln. $\alpha$, $\omega$-Dihydroxypolydimethylsiloxan, Viskosität bei 20° C 50.000 cSt und 20 Gew.-Tln. $\alpha$, $\omega$-Bis-(trimethylsiloxy)-polydimethylsiloxan, Viskosität bei 20° C 1.400 cSt vorgelegt. Dazu wurden bei Raumtemperatur 5 Gew.-Tle Ethyltriacetoxysilan gegeben und kurz gerührt. Nun wurden 9 Gew.-Tle feindisperse Kieselsäure sowie 0,4 Gew.-Tle Eisenoxidpigment zugegeben und bis zur Homogenität unter Vakuum gerührt. Danach wurden 0,02 Gew.-Tle eines Katalysators (Dibutylzinndiacetat) zugegeben und unter Vakuum homogen eingerührt. Zum Schluß wurde mit 60 Gew.-Tln. Xylol versetzt und homogen eingemischt. Am Ende wurde kurz Vakuum angelegt.

Beispiel 5

Es wurde eine Mischung aus 60 Gew.-Tln. $\alpha$, $\omega$-Dihydroxypolydimethylsiloxan, Viskosität bei 20° C

4

50.000 cSt und 20 Gew.-Tln. α, ω-Bis-(trimethylsiloxy)-polydimethylsiloxan, Viskosität bei 20°C 1.400 cSt sowie 2 Gew.-Tln. Hexamethyldisiloxan vogelegt. Dazu wurden bei Raumtemperatur 5 Gew.-Tle Ethyltriacetoxysilan gegeben und kurz gerührt. Nun wurden 9 Gew.-Tle feindisperse Kieselsäure sowie 0,4 Gew.-Tle Eisenoxidpigment zugegeben und bis zur Homogenität unter Vakuum gerührt. Nun wurde mit 1,0 Gew.-Tln eines komplexen Titansäureesters (Di-butoxy-di-acetessigester-titanat) versetzt und kurz gerührt. Danach wurden 0,03 Gew.-Tle eines Katalysators (Dibutylzinndiacetat) zugegeben und unter Vakuum homogen eingerührt. Zum Schluß wurde mit 60 Gew.-Tln. Xylol versetzt und homogen eingemischt. Am Ende wurde kurz Vakuum angelegt.

Beispiel 6

Es wurde eine Mischung aus 35 Gew.-Tln α, ω-Dihydroxypolydimethylsiloxan, Viskosität bei 20°C 50.000 cSt und 8 Gew.-Tln α, ω-Bis-(trimethylsiloxy)-polydimethylsiloxan, Viskosität bei 20°C 1.400 cSt vorgelegt. Dazu wurden bei Raumtemperatur 4,5 Gew.-Tle eines komplexen Titansäureesters (Di-butoxy-di-acetessigester-titanat) gegeben und verrührt. Danach wurden 4,5 Gew.-Tle einer feindispersen Kieselsäure sowie 40 Gew.-Tle einer Kreide eingearbeitet (zum Schluß unter Vakuum). Nun wurden 1,2 Gew.-Tle eines Eisenoxidpigments sowie 1,4 Gew.-Tle eines Katalysators (Dibutylzinndilaurat) eingerührt. Nun werden 4 Gew.-Tl. Bis-[N-methylbenzamido]-ethoxy-methylsilan zugemischt. Zum Schluß wurde mit 50 Gew.-Tln. Isododecan versetzt und homogen eingemischt. Am Ende wurde kurz Vakuum angelegt.

Beispiel 7

Es wurde eine Mischung aus 34 Gew.-Tln α, ω-Dihydroxypolydimethylsiloxan, Viskosität bei 20°C 50.000 cSt und 34 Gew.-Tln α, ω-Bis-(trimethylsiloxy)-polydimethylsiloxan, Viskosität bei 20°C 1.400 cSt vorgelegt. Dazu wurden 4 Gew.-Tle eines komplexen Titansäureesters (Di-butoxy-diacetessigester-titanat), 2 Gew.-Tle Methyltrimethoxysilan und 0,5 Gew.-Tle γ-Glycidyloxypropyltrimethoxysilan gegeben und eingerührt. Jetzt wurde mit 30 Gew.-Tln einer Kreide sowie 1,2 Gew.-Tln eines Eisenoxydpigments versetzt und gerührt. Nun wurden 4,5 Gew.-Tle einer feindispersen Kieselsäure eingerührt (am Schluß Vakuum angelegt). Danach wurde mit 0,06 Gew.-Tln eines Katalysators (Dibutylzinndiacetat) versetzt und unter Vakuum eingearbeitet. Zum Schluß wurde mit 50 Gew.-% einer Benzinfraktion (Isopar H von der Fa. Esso) versetzt und homogen eingemischt. Am Ende wurde kurz Vakuum angelegt.

Beispiel 8

Es wurde eine Mischung aus 60 Gew.-Tln, α, ω-Dihydroxypolydimethylsiloxan, Viskosität bei 20°C 50.000 cSt und 20 Gew.-Tln α, ω-Bis-(trimethylsiloxy)-polydimethylsiloxan, Viskosität bei 20°C 1.400 cSt sowie 2 Gew.-Tle Hexamethyldisiloxan vorgelegt. Dazu wurden bei Raumtemperatur 5 Gew.-Tle Methyltris-(2-butanonxim)-silan gegeben und kurz gerührt. Nun wurden 8 Gew.-Tle feindisperser Kieselsäure, sowie 0,4 Gew.-Tle Eisenoxidpigment zugegeben und bis zur Homogenität unter Vakuum gerührt. Danach wurden 0,5 Gew.-Tle. γ-Aminopropyl-triethoxysilan und 0,6 Gew.-Tle eines Katalysators (Dibutylzinndilaurat) zugegeben und unter Vakuum homogen eingerührt. Zum Schluß wurde mit 60 Gew.-Tln Xylol versetzt und homogen eingemischt, wobei gegen Ende kurz Vakuum angelegt wurde.

Beispiel 9

Es wurde eine Mischung aus 60 Gew.-Tln α, ω-Dihydroxypolydimethylsiloxan, Viskosität bei 20°C 50.000 cSt und 20 Gew,-Tln α, ω-Bis-(trimethylsiloxy)-polydimethylsiloxan, Viskosität bei 20°C 1.400 cSt sowie 2 Gew.-Tle Hexamethyldisiloxan vorgelegt. Dazu wurden bei Raumtemperatur 6 Gew.-Tle Methyltributylaminosilan gegeben und kurz gerührt. Nun wurden 13 Gew.-Tle einer feindispersen Kieselsäure sowie 0,4 Gew.-Tle Eisenoxidpigment zugegeben und bis zur Homogenität gerührt. Zum Schluß wurde mit 20 Gew.-Tln Xylol und 40 Gew.-Tln Isododecan versetzt und homogen eingemischt, wobei gegen Ende des Mischvorgangs kurz Vakuum angelegt wurde.

Beispiel 10

Es wurde eine Mischung aus 60 Gew.-Tln. α, ω-Dihydroxypolydimethylsiloxan, Viskosität bei 20°C 50.000 cSt und 20 Gew.-Tln. α, ω-Bis-(trimethylsiloxy)-polydimethylsiloxan, Viskosität bei 20°C 1.400 cSt sowie 2 Gew.-Tln. Hexamethyldisiloxan vorgelegt. Dazu wurden bei Raumtemperatur 5 Gew.-Tle. Ethyltriacetoxysilan gegeben und kurz angerührt. Nun wurden 9 Gew.-Tle. feindisperse Kieselsäure sowie 0,4 Gew.-Tle. Eisenoxidpigment zugegeben und bis zur Homogenität unter Vakuum gerührt. Danach wurden 0,02 Gew.-Tle. eines Katalysators (Dibutylzinndiacetat) zugegeben und unter Vakuum homogen eingerührt. Zum Schluß wurde mit 65 Gew.-Tln. Methylenchlorid auf die Ausgangsmenge versetzt und homogen eingemischt. Am Ende wurde kurz Vakuum angelegt.

Beispiel 11

Es wurde eine Mischung aus 60 Gew.-Tln. α, ω-Dihydroxypolydimethylsiloxan, Viskosität bei 20°C 50.000 cSt und 20 Gew.-Tln. α, ω-Bis-(trimethylsiloxy)-polydimethylsiloxan, Viskosität bei 20°C 1.400 cSt vorgelegt. Dazu wurden bei Raumpemperatur 5 Gew.-Tle. Ethyltriacetoxysilan sowie 0,9 Gew.-Tle. Di-tertiär-butoxydiacetoxysilan gegeben und kurz angerührt. Nun wurden 9 Gew.-Tle. feindisperse Kieselsäure sowie 0,4 Gew.-Tle. Eisenoxidpigment zugegeben und bis zur Homogenität unter Vakuum gerührt. Danach wurden 0,02 Gew.-Tle. eines Katalysators (Dibutylzinndiacetat) zugegeben und unter Vakuum homogen eingerührt. Zum Schluß wurde mit 65 Gew.-Tln. 1,1,1-Trichlorethan auf die Ausgangsmenge versetzt und homogen eingemischt. Am Ende wurde kurz Vakuum angelegt.

Mit den erwähnten Massen wurden folgende anti-icing-Versuche durchgeführt:

1) Test in einer Klimakammer

Auf einer 8 x 1000 x 1000 mm großen Stahlplatte, beschichtet mit Material gemäß Beispiel 4, wurde eine ca. 25 mm dicke Eissicht (aus Seewasser) bei einer Temperatur von -21°C erzeugt. Die Platte befand sich in einer vertikalen Position, Die Dicke der Beschichtung betrug 1,5 mm.

Nach dem sich das Eis gebildet hatte, wurde die Temperatur von -21°C für weitere 12 Stunden aufrecht erhalten, damit das gesamte Eis diese Temperatur annehmen konnte.

Danach wurde die Temperatur in der Klimakammer langsam (2°C/h) erhöht.

Bei -10°C gingen die Adhäsionskräfte Eis zum Silicon-Gummi so weit zurück, daß sich das Eis löste und herabfiel, d.h. es gab bei -10°C bereits keine Adhäsion zwischen Eis und der erfindungsgemäß eingesetzten Masse.

Bei einem in der Praxis verwendeten Vinyl-Anstrich dagegen haftete das Eis sehr gut und konnte erst bei Temperaturen über 0°C entfernt werden.

2) Test in einer Klimakammer mit Simulation der natürlichen Umgebung (Wind, Temp., Wasser)

Hier wurden wieder einige Platten mit der Masse gemäß Beispiel 1 überzogen (1 x 500 x 500 mm) (Beschichtungsdichte 1,5 mm) und in der Klimakammer getestet (vgl. Tab. 1)

Tab. 1

| Test Nr. | 1 | 2 | 3 | 4 | 5 | 6 |
|---|---|---|---|---|---|---|
| Windgeschwindigkeit (m/s) | 1 | 12 | 1 | 12 | 1 | 12 |
| Lufttemperatur (°C) | -6 | -6 | -14 | -14 | -20 | -20 |
| Seewassertemperatur (°C) | +4,5 | +4,5 | +4,5 | +4,5 | +4,5 | +4,5 |
| Durchmesser der See-wassertropfen (mm) | 0,1 | 0,1 | 0,1 | 0,1 | 0,1 | 0,1 |
| Spritzfrequenz (s/s) | 2/5 | 2/5 | 2/5 | 2/5 | 2/5 | |
| Wassergehalt/flüssig (g/m³) | 1 | 1 | 1 | 1 | 1 | |

Die Platten wurden mit einer Neigung von 15° aufgestellt. Dieser Winkel ist praxisnah und begünstigt die Vereisung.

Die Testplatten wurden jede Stunde beobachtet, um jede Formation des Eises auf der Oberfläche registrieren zu können.

7

Tabelle 2

| Test-Nr. | Wind (m/s) | Lufttemp. °C | Testdauer hrs | Eisdicke (mm) | Bemerkungen |
|---|---|---|---|---|---|
| 1 | 1 | -6 | 4 | 0 | kein Eis, Wasser spritzte von der Platte |
| 2 | 12 | -6 | 9 | 0-4 | lockerer Eismatsch in der Wasserschicht |
| 3 | 1 | -14 | 5 | 1-4 | hartes Eis, leicht mit der Hand zu entfernen |
| 4 | 12 | -14 | 12 | 10-50 | hartes nadelförmiges Eis, welches vom Wind nach einer gewissen Zeit fortgeblasen wurde. Die verbleibende dünne Schicht konnte leicht mit der Hand entfernt werden |
| 5 | 1 | -20 | 4 | 1-4 | hartes Eis, leicht mit der Hand zu entfernen |
| 6 | 12 | -20 | 2,5 | 2-4 | hartes Eis, leicht mit der Hand zu entfernen |
| 7 | 12 | -14 | 3 | 5-10 | hartes Eis, bricht kohäsiv bei Versuch der Entfernung |

Tabelle 2 Simuliertes Klima, bei Test Nr. 1-6 wurde eine Beschichtung gemäß Beispiel 1 und bei Test Nr. 7 eine Standard-Vinyl-Beschichtung geprüft.

Dieser Test zeigte eindeutig den Vorteil einer mit der Silcon-Masse behandelten Platte gegenüber einem wie in der Praxis üblich mit Vinyl-Anstrich behandelten Untergrund.

Bei den mit Silicon-Gummi behandelten Platten konnte das Eis sehr leicht entfernt werden, bzw. wurde vom Wind abgeblasen, wenn es eine bestimmte Größe erreichte.

Bei dem in der Praxis verwendeten Vinyl-Anstrich (Test Nr. 7) dagegen waren die Adhäsionskräfte stärker als die Kohäsionskräfte und es konnte sich so eine dauerhafte Eisschicht bilden.

Im Test Nr. 6 wurde die Platte nach dem obigen Test sogar noch weitere 48 Stunden (ohne Wind und Seewasser) gelagert. Das Eis war danach im Gleichgewicht mit der Umgebung. Auch nach dieser Belastung wurden keine speziellen Änderungen der Eigenschaften beobachtet und das Eis konnte noch immer leicht mit der Hand entfernt werden.

## Patentansprüche

1. Verwendung von Polysiloxanmassen, die sich unter Einwirkung von Wasser bzw. Luftfeuchtigkeit in gummielastische Massen umwandeln und die aus den folgenden Komponenten erhältlich sind:
   A) $\alpha$, $\omega$-Dihydroxypolydiorganosiloxanen einer Viskosität von etwa 500 bis 2.000.000 cP (20° C)
   B) gegebenenfalls eines $\alpha$, $\omega$-Bis-(trimethylsiloxy)-polydimethylsiloxans
   C) einer vernetzend wirkenden Substanz
   D) gegebenenfalls eines oder mehrerer Haftvermittler
   E) eines verstärkend und/oder nicht verstärkend wirkenden Füllstoffs sowie Pigmente
   F) eines Härtungskatalysators
   G) gegebenenfalls eines Lösungsmittels
   zur Verhinderung der Vereisung auf Substraten.

2. Verwendung einer Polysiloxanmasse gemäß Anspruch 1, dadurch gekennzeichnet, daß als vernetzende Substanz C) ein Alkyl-triacetoxy-silan eingesetzt wird.

## Claims

1. The use of polysiloxane compounds which change into rubber-elastic compounds under the effect of water or atmospheric moisture and which may be obtained from the following components:
   A) $\alpha,\omega$-dihydroxypolydiorganosiloxanes having a viscosity of approximately 500 to 2,000,000 cP (20° C)
   B) optionally an $\alpha,\omega$-bis-(trimethylsiloxy)-polydimethylsiloxane
   C) a crosslinking agent
   D) optionally one or more primers
   E) a reinforcing and/or non-reinforcing filler and pigments
   F) a curing catalyst
   G) optionally a solvent,
   for preventing icing on substrates.

2. The use of the polysiloxane compound claimed in claim 1, characterized in that an alkyl triacetoxy silane is used as the crosslinking agent C).

## Revendications

1. Utilisation de matières de polysiloxane, qui, sous l'effet de l'eau ou de l'humidité, se transforment en matières de gomme élastique et que l'on peut obtenir à partir des composants ci-après :
   A) des $\alpha,\omega$-dihydroxypolydiorganosiloxanes ayant une viscosité d'environ 500 à 2.000.000 cP (20° c),
   B) éventuellement un $\alpha,\omega$-bis-(triméthylsiloxy)-polydiméthylsiloxane,
   C) une substance à action réticulante,
   D) éventuellement un ou plusieurs agents adhésifs,
   E) une matière de charge de renforcement et/ou de non-renforcement, ainsi que des pigments,
   F) un catalyseur de durcissement,
   G) éventuellement un solvant
   pour empêcher le givrage sur des substrats.

2. Utilisation d'une matière de polysiloxane selon la revendication 1, **caractérisée en ce que,** comme

9

substance réticulante C), on met en oeuvre un alkyltriacétoxysilane.